# EUROPÄISCHE PATENTSCHRIFT

(11) **EP 0 761 288 B1**
(45) Veröffentlichungstag und Bekanntmachung des Hinweises auf die Patenterteilung: **09.08.2000**
(21) Anmeldenummer: 96108745.9
(22) Anmeldetag: 31.05.1996
(51) Int. Cl.: B01D 53/70, B01D 53/68, B01D 53/86, B01D 53/04

(54) **Vorrichtung und Verfahren zur Reinigung von Gasen, die halogenierte Verbindungen enthalten**
Apparatus and process for cleaning gases containing halogenated compounds
Dispositif et procédé pour purifier des gaz contenant des composants halogénés

(30) Priorität: 01.09.1995 DE 19532279
(43) Veröffentlichungstag der Anmeldung: 12.03.1997
(73) Patentinhaber: CS-GmbH Halbleiter- und Solartechnologie, D-85737 Ismaning (DE)
(72) Erfinder: Scholz, Christoph Dr., D-83666 Waakirchen (DE); Holzinger, Walter Dr., D-82041 Deisenhofen (DE); Weber, Thomas, D-80686 München (DE)
(74) Vertreter: Haft, von Puttkamer, Berngruber, Czybulka

(56) Entgegenhaltungen:
- EP-A- 0 490 632
- EP-A- 0 599 271
- DE-A- 4 135 018
- DE-C- 549 531
- DE-C- 4 102 969

## Beschreibung

Die Erfindung bezieht sich auf ein Verfahren zur Reinigung von Abgasen, die ozonabbauende und/oder klimawirksame halogenierte Verbindungen enthalten gemäß dem Oberbegriff des Anspruchs 1. Sie hat auch eine Vorrichtung zur Durchführung dieses Verfahrens zum Gegenstand.

In der Halbleiterindustrie werden zum Trockenätzen große Mengen von perfluorierten Verbindungen verwendet, die auch als PFC (Perfluorinated Compounds) bezeichnet werden. Dazu gehören insbesondere Tetrafluorkohlenstoff (CF₄), Trifluormethan (CHF₃), Hexafluorethan (C₂F₆) sowie Schwefelhexafluorid (SF₆) und Stickstofftrifluorid (NF₃). Aus diesen Verbindungen wird beispielsweise durch elektrische Entladung Fluor gebildet, mit dem das Halbleitersubstrat, beispielsweise ein Silizium-Wafer, geätzt wird.

Perfluorierte Verbindungen sind extrem reaktionsträge. Sie werden daher von den Abgasreinigungsanlagen, die in der Halbleiterindustrie verwendet werden, nicht erfaßt und damit an die Atmosphäre abgegeben. Perfluorierte Verbindungen zeichnen sich jedoch durch hohe Klimawirksamkeit, das sogenannte GWP (Greenhouse Warming Potential) aus. Dies gilt insbesondere für Schwefelhexafluorid, das ein extrem hohes GWP besitzt. Darüberhinaus sind einige dieser Verbindung sehr toxisch, beispielsweise Stickstofftrifluorid.

Das Problem der Reaktionsträgheit stellt sich nicht nur bei der Abgasreinigung perfluorierter Verbindungen, sondern auch bei anderen halogenierten Verbindungen, insbesondere halogenierten Kohlenwasserstoffen, wie Chlorkohlenwasserstoff (CKW), Chlorfluorkohlenwasserstoff (FCKW), Bromfluorkohlenwasserstoff usw.. Auch diese Stoffe werden daher in großen Mengen an die Atmosphäre abgegeben. Sie sind maßgeblich am Abbau der Ozonschicht in der Stratosphäre beteiligt, besitzen also ein hohes sogenanntes ODP (Ozone Depletion Potential).

Aus der DE-A-44 04 329 geht eine Vorrichtung und ein Verfahren zur Entfernung ozonabbauender und/oder klimawirksamer halogenierter Verbindungen nach dem Oberbegriff des Anspruchs 1 bzw. 5 hervor, bei dem die halogenierte Verbindung in einem Trägergas-Strom durch ein erwärmtes eisenoxid- oder eisenoxyhydroxidhaltiges Phyllosilikatsorbens geleitet wird. So wird z.B. mit einem auf etwa 300°C erwärmten Bentonit-Festbettreaktor und mit Stickstoff als Trägergas eine quantitative Absorption von Tetrafluorkohlenstoff erhalten. Da das Sorbens eine geringe Wärmeleitfähigkeit besitzt, müßte das Festbett bei einem hohen Gasdurchsatz im industriellen Einsatz mit einem sehr hohen Energieverbrauch geheizt werden. Zwar ist daran zu denken, dem Festbett einen Wärmeaustauscher vorzuschalten, um auch bei einem hohen Gasdurchsatz die notwendige Temperatur von ca. 300 °C im Sorbens aufrechtzuerhalten. Bei Trockenätzprozessen der Halbleitertechnik weist das Abgas jedoch einen hohen Fluorgehalt und damit eine extrem hohe Korrosivität auf. Ein metallischer Wärmetauscher ist daher nicht einsetzbar.

Zum Entfernen flüchtiger organischer Verbindungen, sogenannter VOC (Volatile Organic Compounds), aus der Abluft beispielsweise von Lackierstraßen, wird die thermische regenerative Abluftreinigung angewandt. Dabei sind wenigstens zwei mit Wärmespeichermaterial versehene Türme über eine Brennkammer verbunden. Der in Strömungsrichtung vor der Brennkammer angeordnete Turm, der vorher auf eine hohe Temperatur gebracht worden ist, heizt die Abluft auf, so daß durch den Brenner nur noch eine geringe Energiemenge zugeführt zu werden braucht. Mit der Zeit sinkt die Temperatur im vorgeschalteten Turm, während sich der nachgeschaltete Turm durch die Verbrennungsgase aufheizt, die aus den vom Brenner verbrannten VOC bestehen. Wenn die aus dem nachgeschalteten Turm austretende gereinigte Abluft eine bestimmte Temperatur erreicht hat, d.h. der nachgeschaltete Turm durch die Verbrennungsgase genügend aufgeheizt ist, wird die Strömungsrichtung des Abgases umgekehrt. Dieses Verfahren wird daher auch als "Thermalswing"-Verfahren bezeichnet.

DE-A-41 35 018 offenbart eine Vorrichtung zur Reinigung von Abluftgasen, die z.B. Lösungsmittel enthalten, mit einer Sorptionseinrichtung, die zwei Kammern aufweist, die ein festes stationäres Bett enthalten und über eine Heizeinrichtung miteinander verbunden sind. Aus EP-A-0 599 271 ist eine Vorrichtung mit zwei solchen Sorptionseinrichtungen bekannt, wobei der Auslaß der ersten Sorptionseinrichtung mit der Gaszufuhr der zweiten Sorptionseinrichtung verbindbar ist.

Aufgabe der Erfindung ist es, ozonabbauende und/oder klimawirksame halogenierte Verbindungen aus Abgasen im industriellen Einsatz wirksam zu beseitigen.

Dies wird erfindungsgemäß mit dem im Anspruch 1 angegebenen Verfahren erreicht. Im Anspruch 7 ist eine bevorzugte Vorrichtung zur Durchführung des erfindungsgemäßen Verfahrens angegeben.

Nach der Erfindung sind die beiden Kammern der Sorptionseinrichtung mit einem festen stationären Sorbens für ozonabbauende bzw. klimawirksame halogenierte Verbindungen gefüllt. Das Sorbens führt zur Zersetzung der ozonabbauenden bzw. klimawirksamen halogenierten Verbindung. Zugleich bindet es die gebildeten Zersetzungsprodukte. Im Ergebnis werden die ozonabbauenden bzw. klimawirksamen halogenierten Verbindungen also chemisorbiert. Da die ozonabbauenden bzw. klimawirksamen halogenierten Verbindungen sehr reaktionsträg sind, muß das Sorbens allerdings auf eine hohe Temperatur aufgeheizt werden.

Wenn die Sorptionseinrichtung in Betrieb genommen wird, läßt man zunächst ein unbelastetes Trägergas, also ein Inertgas, wie Stickstoff, bei eingeschalteter Heizeinrichtung durch die Sorptionseinrichtung strömen. Dadurch heizt sich das Sorbens auf, das in der Kammer enthalten ist, welche in Strömungsrichtung der Heizeinrichtung nachgeschaltet ist.

Wenn das aus dieser Kammer austretende Trägergas eine bestimmte Temperatur überschritten hat, also das Sorbens die für die Zersetzung der ozonabbauenden bzw. klimawirksamen halogenierten Verbindungen erforderliche Temperatur erreicht hat, kann unter Umkehr der Strömungsrichtung dieser Kammer nun das zu reinigende Abgas zugeführt werden.

Da die halogenierten Verbindungen in dieser Kammer restlos aus dem Abgas entfernt werden, wird die nachgeschaltete Heizeinrichtung keinen korrosiven Verbindungen ausgesetzt.

Mit der Zeit kühlt sich Sorbens in der der Heizeinrichtung vorgeschalteten Kammer ab, während der anderen Kammer ständig von der Heizeinrichtung aufgeheiztes gereinigtes Abgas zugeführt wird, so daß sich das Sorbens in der der Heizeinrichtung nachgeschalteten Kammer erwärmt. Sobald das Sorbens in der der Heizeinrichtung nachgeschalteten Kammer seinerseits die für die Zersetzung der ozonabbauenden bzw. klimawirksamen halogenierten Verbindungen notwendige Temperatur erreicht hat, wird die Strömungsrichtung des Abgases umgekehrt usw..

D.h., das Abgas wird abwechselnd jeweils einer der beiden Kammern der Sorptionseinrichtung zugeführt, während die andere Kammer den Auslaß für das gereinigte Gas in die Atmosphäre aufweist.

Das erfindungsgemäße Verfahren ist damit sehr schnell, beispielsweise bereits nach einer Stunde betriebsbereit. Die dann erfolgende abwechselnde Zufuhr des Abgases kann in Intervallen von beispielsweise 5 - - 30 Minuten erfolgen. Nach wenigen Stunden haben beide Kammern den optimalen Endzustand erreicht, bei dem mit einer hohen Raumgeschwindigkeit von beispielsweise 1000 h⁻¹ und mehr eine quantitative Beseitung von ozonabbauenden bzw. klimawirksamen halogenierten Verbindungen aus Abgasen mit minimaler Energiezufuhr erreichbar ist.

Wenn das System den Endzustand erreicht hat, braucht die Heizeinrichtung im wesentlichen nur noch die Wärme zu liefern, die die Vorrichtung abstrahlt. Bei einem Abgas-, d.h. einem Stickstoff-Durchsatz von beispielsweise 100 l/min. und einer Temperatur des Sorbens von ca. 300°C beträgt die Heizleistung der Heizeinrichtung beispielsweise lediglich etwa 150 Watt.

Zu den ozonabbauenden und/oder klimawirksamen halogenierten Verbindungen, die mit der erfindungsgemäßen Vorrichtung aus einem Gasstrom, insbesondere einem Inertgasstrom, wie einem Stickstoffstrom, entfernt werden können, gehören insbesondere Fluorkohlenwasserstoffe (FKW), Chlorkohlenwasserstoffe (CKW), Chlorfluorkohlenwasserstoffe (FCKW), Bromfluorkohlenwasserstoffe, Bromchlorfluorkohlenwasserstoffe sowie teilhalogenierte Fluorkohlenwasserstoffe und Chlorfluorkohlenwasserstoffe, die 1 bis 4 Kohlenstoffatome besitzen, insbesondere Trichlorfluormethan, Dichlordifluormethan, Bromchlordifluormethan, Dibromdifluormethan, Chlortrifluormethan, Bromtrifluormethan, Tetrafluormethan, Dichlorfluormethan, Chlordifluormethan, Trifluormethan (Fluoroform), Difluormethan (Methylenfluorid), 1,1,2,2-Tetrachlordifluorethan, 1,1,2-Trichlortrifluorethan, 1,2-Dichlortetrafluorethan, 1,2-Dibromtetrafluorethan, Chlorpentafluorethan, Hexafluorethan, 1,2-Dibrom-1,1-difluorethan, 2-Chlor-1,1,1-trifluorethan, 1-Chlor-1,1-difluorethan, 1,1,1-Trifluorethan, 1,1-Difluorethan, Octafluorpropan, Octafluorcyclobutan, Decafluorbutan, 1,1-Dichlordifluorethylen, Chlortrifluorethylen (Trifluorvinylchlorid), 1-Chlor-2,2-difluorethylen, 1,1-Difluorethylen (Vinylidenfluorid).

Die Erfindung ist aber nicht nur zur Entsorgung FCKW, FKW und CKW geeignet, sondern allgemein für Halogenkohlenwasserstoffe anwendbar, also z.B. auch für Halone, Tetrachlorkohlenstoff, Methylchloroform oder teilhalogeniert Halone.

Ein wichtiges Einsatzgebiet stellt für die erfindungsgemäße Vorrichtung die Reinigung von Abgasen dar, die beim Trokkenätzen mit perfluorierten Verbindungen (PFC) in der Halbleiterindustrie anfallen. Die PFC's werden dabei nicht nur zum Ätzen der Halbleiterbauelemente, also z.B. von Siliciumwafer eingesetzt, sondern dienen zugleich als Reinigungsgas für die Kammern zur Herstellung der Halbleiterelemente.

Neben Tetrafluormethan, Trifluormethan und Hexafluorethan werden dabei als PFCs vor allem auch das sehr toxische Stickstofftrifluorid und das ein besonders hohes GWP aufweisende Schwefelhexafluorid verwendet.

Die halogenierte Verbindung wird der Sorptionseinrichtung in einem inerten Trägergas zugeführt, z.B. Stickstoff oder ein Edelgas.

Der Gehalt der halogenierten Verbindung im Abgas bzw. Stickstoffträgergas kann 1 vol.-% und mehr betragen, z.B. 1 - 20 vol.-%.

Das feste stationäre Sorbens enthält vorzugweise Eisenoxid, Eisenoxyhydroxid, ein Eisenhdroxysalz und/oder Eisenoxyhydroxysalz. Dieses Sorbens wird im einzelnen in der DE-A-44 04 329 beschrieben. Das Eisenoxyhydroxid kann dabei Goethit und das Eisenoxyd Maghemit, Magnetit, Ferrihydrit oder Hämatit sein. Das Sorbens weist weiterhin vorzugsweise ein Phylosilikat mit einem Anteil von mindestens 10, vorzugsweise mindestens 50 Gew.-% auf. Das Phyllosilikat kann ein Mineral der Montmorin-Gruppe, Talk und/oder ein Mineral der Glimmergruppe sein. Als Minerale der Montmorin-Gruppe können insbesondere Bentonite und damit eng verwandte Tonmaterialien, wie Montmorillonit, Nontronit, Saponit oder Vermicullit eingesetzt werden. Als Mineral der Glimmergruppe sind beispielsweise Muskovit, Biotit, Illit, Phlogopit, Lepidolith, Margarit, Paragonit und Chloritoid zu nennen. Ebenso können Kaoline oder Chamosit sowie Serpentin-Mineralien zum Einsatz kommen.

Damit die ozonabbauende bzw. klimawirksame halogenierte Verbindung zersetzt wird, muß das Sorbens in der Kammer, die Strömungsrichtung der Heizeinrichtung vorgeordnet ist, auf die erforderliche Zersetzungstemperatur erwärmt sein, die im allgemeinen zwischen 150 und 450 °C liegt.

Dabei ist es nicht erforderlich, daß das gesamte Sorbens in der der Heizeinrichtung vorgeschalteten Kammer diese hohe Zersetzungstemperatur besitzt. Vielmehr reicht es aus, wenn nur die der Heizeinrichtung benachbarte Zone des Sorbens auf die Zersetzungstemperatur der ozonabbauenden und/oder klimawirksamen halogenierten Verbindungen erwärmt ist, während der restliche Teil des Sorbens eine Zone mit einer niedrigeren Temperatur bildet.

In dieser Zone niedriger Temperatur werden dann die reaktionsfreudigeren Verbindungen in dem Abgas gebunden, die bei dem jeweiligen industriellen Prozeß anfallen. So enthält, z.B. das Abgas, das beim Trockenätzen in der Halbleitindustrie mit PFC anfällt, beispielsweise Fluorgas (F₂) Siliziumtetrafluorid, Fluorphosgen (COF₂) und dergleichen reaktionsfreudige Gase, die bereits bei Raumtemperatur absorbiert werden. Dabei kann das Sorbens, das für die Zone niedriger Temperatur verwendet wird, das gleiche oder ein anderes Sorbens sein als das Sorbens, das zur Chemisorption der ozonabbauenden und/oder klimawirksamen halogenierten Verbindungen in der heißen Zone eingesetzt wird.

Die Erfindung kann auch zur Entsorgung von ozonabbauenden und/oder klimawirksamen halogenierten Verbindungen eingesetzt werden. Die halogenierten Verbindungen werden dazu in einem Trägergas, insbesondere Stickstoff, in Dampfform der erfindungsgemäßen Vorrichtung zugeführt. Dabei ist zu bedenken, daß riesige Mengen dieser Verbindungen entsorgt werden müssen.

Das verbrauchte Sorbens soll gefahrlos und ohne großen Aufwand entsorgt werden können.

Dazu kann erfindungsgemäß vorzugsweise auf die Sorptionskolonne nach der DE-A-41 02 969 zurückgegriffen werden. Diese kann aus zwei aufeinanderstapelbaren Fässern oder dergleichen Behältern gebildet sein, von denen jeder ein Ventil im Deckel und ein Ventil im Boden aufweist. Das untere Faß ist auf ein unteres Gasanschlußteil stellbar, und an das obere Faß ein oberes Gasanschlußteil anschließbar. Das untere und das obere Gasanschlußteil weisen dazu jeweils ein Kupplungsstück auf, das mit dem Ventil im Boden des unteren Fasses bzw. mit dem Ventil im Deckel des oberen Fasses zusammensteckbar ausgebildet ist. Ebenso ist das Ventil im Deckel des unteren Behälters mit dem Ventil im Boden des darauf gestapelten Behälters bei der bekannten Sorptionskolonne zusammensteckbar ausgebildet. Wenn alle Ventile zusammengesteckt sind, wird ein sich vom unteren Gasanschlußteil zum oberen Gasanschlußteil kommunizierender Gasraum gebildet.

Um die erfindungsgemäße Vorrichtung zu bilden, braucht die bekannte Sorptionskolonne im wesentlichen nur zum Zusammenstecken des Ventils im Deckel des unteren Behälters mit dem Ventil im Boden des oberen Behälters mit einem Zwischenteil versehen zu werden, das die Heizeinrichtung aufweist. Ferner sind die Behälter vorzugsweise mit einer Wärmeisolierung versehen.

Nachstehend ist die Erfindung anhand der Zeichnung beispielsweise näher erläutert. Darin zeigen:
- Fig. 1: schematisch eine Abgasreinigungsvorrichtung mit einer Sorptionseinrichtung mit zwei Kammern sowie ein Diagramm, das das Betriebstemperaturprofil in der Sorptionseinrichtung darstellt;
- Fig. 2: schematisch zwei in Serie geschaltete Sorptionseinrichtungen mit jeweils zwei Kammern;
- Fig. 3: einen Längsschnitt durch eine Ausführungsform einer Sorptionseinrichtung nach Figur 1 oder Figur 2;
- Fig. 4: in gegenüber Figur 3 vergrößerter Wiedergabe einen Längsschnitt durch die Sorptionseinrichtung im Bereich des Zwischenteils.

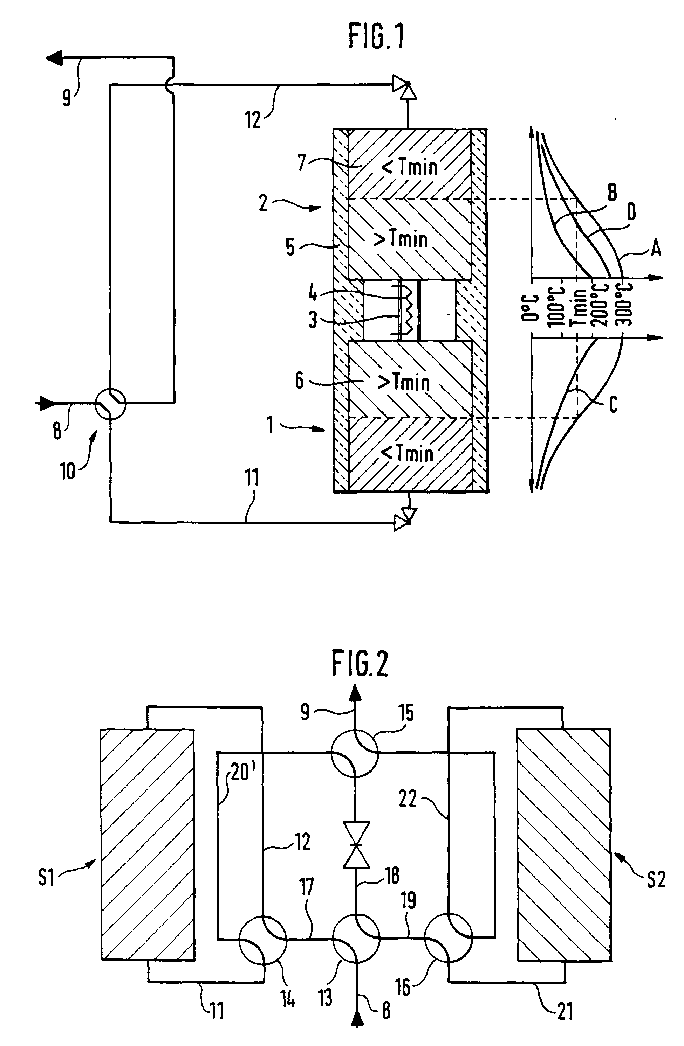

Gemäß Figur 1 weist die Vorrichtung zwei Kammern 1 und 2 auf, die durch ein als Rohr ausgebildetes Zwischenteil 3 verbunden sind, das mit einer elektrischen Heizeinrichtung 4 versehen ist. Die beiden Kammern 1 und 2 und das Zwischenteil 3 sind von einer Wärmeisolation 5 umgeben. Die beiden Kammern 1 und 2 sind mit einem festen, stationären Sorbens 6 bzw. 7 gefüllt, das ein Granulat sein oder in anderer stückiger Form vorliegen oder ein vom Formkörper, z.B. ein honigwabenförmiger Formkörper sein kann.

Das zu reinigende, die ozonabbauende und/oder klimawirksame halogenierte Verbindungen enthaltende Abgas, wird z.B. in einem Stickstoffstrom über die Abgasleitung 8 zugeführt, während das gereinigte Abgas über die Auslaßleitung 9 in die Atmosphäre austritt. Die Abgasleitung 8 und die Auslaßleitung 9 sind an eine Ventileinrichtung, beispielsweise ein 4/2-Wegeventil 10 angeschlossen, dessen beide andere Anschlüsse mit der Leitung 11 bzw. 12 verbunden sind, die in die Kammer 1 mit dem Sorbens 6 bzw. in die Kammer 2 mit dem Sorbens 7 münden.

Die Kammern 1 und 2 und das Zwischenteil 3 bilden einen Gasraum, der im Betrieb (Endzustand) einen Temperaturverlauf aufweist, wie er beispielsweise durch die Kurve A in Figur 1 rechts wiedergegeben ist.

D.h. in jeder Kammer 1 bzw. 2 steigt die Temperatur beispielsweise von Raumtemperatur an der Stelle, an der die Leitung 11 bzw. 12 angeschlossen ist, auf eine Temperatur von beispielsweise 300 °C an der Stelle, an der das Zwischenteil 3 mit der Heizeinrichtung 4 angeschlossen ist, an.

Mit Tmin ist in die Figur 1 die Temperatur bezeichnet, die mindestens vorliegen muß, damit das zu entfernende ozonabbauende und/oder klimawirksame halogenierte Gas zersetzt und damit chemisorbiert werden kann. Tmin liegt beispielsweise bei ca. 150 °C. Die Zone mit der Temperatur > Tmin ist in Figur 1 von der Zone mit der Temperatur < Tmin durch eine gestrichelte Linie getrennt.

Zum Aufheizen wird die Heizeinrichtung 4 eingeschaltet. Dabei wird unbelastetes N₂ über die Leitung 8 zugeführt. Das 4/2-Wegeventil 10 befindet sich in der in Figur 1 dargestellten Stellung. Das unbelastete N₂ wird der Kammer 1 solange zugeführt bis die Kammer 2 durch das mit der Heizeinrichtung 4 aufgeheizte N₂ einen Temperaturverlauf etwa gemäß der Kurve B aufweist. Damit befindet sich das der Heizeinrichtung 4 benachbarte Sorbens 7 in der Kammer 2 auf einer Temperatur > Tmin. Das aus der Kammer 2 in die Leitung 12 austretende N₂-Gas weist dann eine Temperatur von z.B. 30 bis 40°C auf. Jetzt wird das 4/2-Wegeventil 10 umgeschaltet, so daß das die ozonabbauenden und/oder klimawirksamen halogenierten Verbindungen enthaltende Abgas in der Leitung 8 über die Leitung 12 der Kammer 2 mit dem gemäß der Kurve B aufgeheizten Sorbens 7 zugeführt wird. Die erwähnten halogenierten Verbindungen werden damit im Sorbens 7 chemisorbiert.

Das gereinigte, durch das Sorbens 7 aufgeheizte Abgas strömt, nachdem es im Zwischenteil mit der Heizung 4 noch weiter aufgeheizt worden ist, in die Kammer 1 mit dem Sorbens 6, bis die Kammer 1 den Temperaturverlauf nach der Kurve C in Figur 1 annimmt.

Das 4/2-Wegeventil 10 wird nun wieder in die in Figur 1 dargestellte Stellung umgeschaltet, so daß das Abgas über die Leitung 11 in die Kammer 1, das Zwischenstück 3, die Kammer 2 und dann über die Leitung 9 ins Freie strömt, bis das Sorbens 7 in der Kammer 2 den Temperaturverlauf gemäß der Kurve D in Figur 1 aufweist. Dieses Umschalten des Ventils 10 wird mehrmals wiederholt, wodurch schließlich der Temperaturverlauf A als Endzustand erhalten wird. Das Umschalten des 4/2-Wegeventils 10 im Endzustand wird dann solange durchgeführt, bis das Sorbens 6, 7 in den Kammern 1 und 2 mit den Zersetzungsprodukten der besagten halogenierten Verbindungen so beladen ist, daß es ausgetauscht werden muß.

Um die Abgasreinigung beim Austausch des Sorbens 6, 7 nicht unterbrechen zu müssen, ist es zweckmäßig gemäß Figur 2 zwei Sorptionseinrichtungen S1 und S2 zu verwenden.

Beide Sorptionseinrichtungen S1 und S2 sind dabei so aufgebaut, wie in Figur 1 dargestellt. D.h. sie bestehen gemäß Figur 1 aus zwei Kammern 1 und 2, die über ein Zwischenstück 3 mit einer Heizeinrichtung 4 verbunden sind.

Dabei sind in Figur 2 vier Ventileinrichtungen, und zwar 4/2-Wegeventile 13, 14, 15 und 16 vorgesehen. Die Abgasleitung 8 ist an das Ventil 13 angeschlossen, das über eine Leitung 17 mit dem 4/2-Wegeventil 14, über eine Leitung 18 mit dem 4/2-Wegeventil 15 und über eine Leitung 19 mit dem 4/2-Wegeventil 16 verbunden ist.

Das 4/2-Wegeventil 14 ist über eine Leitung 11 einerseits mit der einen und über eine Leitung 12 andererseits mit der anderen Kammer 1, 2 (vergleiche Figur 1) der Sorptionseinrichtung S1 verbunden, und über die Leitung 20 mit dem Ventil 15, an das die Auslaßleitung 9 angeschlossen ist. Das 4/2-Wegeventil 16 ist über die Leitung 21 einerseits mit der einen und über die Leitung 22 andererseits mit der anderen Kammer 1, 2 (Figur 1) der Sorptionseinrichtung S2 verbunden.

In der in Figur 2 dargestellten Betriebsstellung sind die Heizungen 4 (Figur 1) der beiden Sorptionseinrichtung S1 und S2 eingeschaltet. Das Abgas wird über die Leitung 8 zunächst der Sorptionseinrichtung S1 zugeführt, und zwar nach Figur 2 der oberen Kammer 2 (Figur 1), so daß in dieser die besagte halogenierte Verbindung chemisorbiert wird, während die Kammer 1 der Sorptionseinrichtung S1 aufgeheizt wird. Durch Umschalten des Ventils 14 wird die Strömungsrichtung in der Sorptionseinrichtung S1 immer dann umgekehrt, wenn das aus der Sorptionseinrichtung S1 austretende Gas eine bestimmte Temperatur von z.B. 30 °C überschreitet.

Das aus der Sorptionseinrichtung 1 austretende gereinigte Abgas wird gemäß Figur 2 über das Ventil 15 der Sorptionseinrichtung S2 zugeführt, in der ihrerseits durch Umschalten des Ventils 16 die Strömungsrichtung umgekehrt werden kann. Das aus der Sorptionseinrichtung S2 austretende Abgas tritt schließlich über das Ventil 15 und der Auslaßleitung 9 ins Freie.

Mit der Sorptionseinrichtung S2 steht also stets eine unbeladene, betriebsbereite Sorptionseinrichtung zur Verfügung. Zugleich werden durch die Sorptionseinrichtung S2 die Abgasvolumina gereinigt, die in der kälteren Zone < Tmin des Sorbens 6, 7 vorliegen, wenn die Strömungsrichtung in der Sorptionseinrichtung S1 durch Umschalten des 4/2-Wegeventil 14 geändert wird.

Wenn das Sorbens 6, 7 in der betreffenden Sorptionseinrichtung S1, S2 beladen ist, wird es durch frisches Sorbens ersetzt. Die Abgasreinigung kann dann vorübergehend nur mit der anderen, unbeladenen Sorptionseinrichtung S2 bzw. S1 durchgeführt werden. Freilich ist es auch möglich, drei Sorptionseinrichtungen in Serie so miteinander zu verbinden, wie in Figur 2 dargestellt.

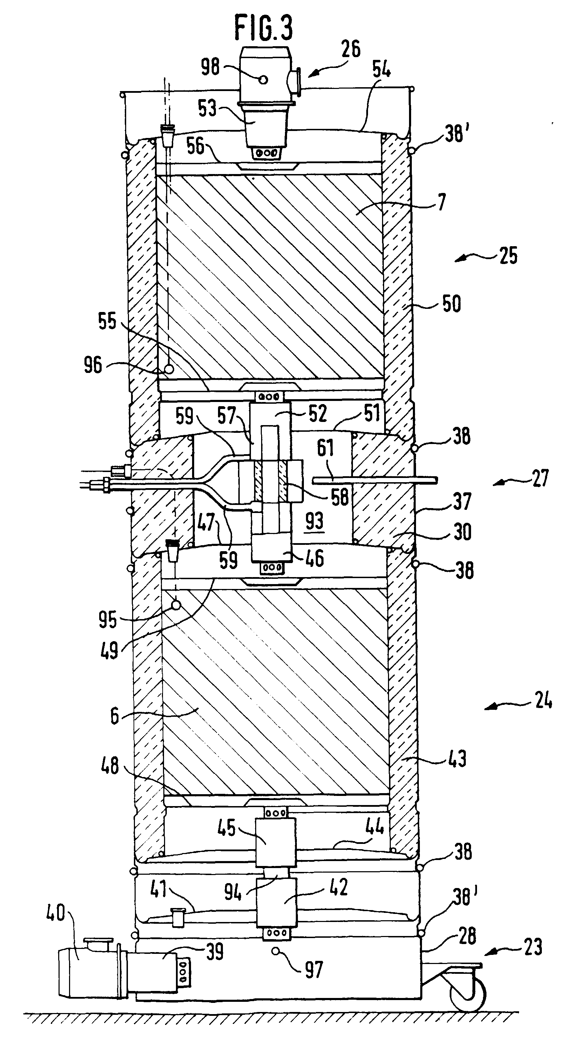

Das beladene Sorbens muß entsorgt werden. Damit dies gefahrlos und ohne großen Aufwand geschieht, kann die Sorptionseinrichtung nach Figur 3 verwendet werden.

Danach ist ein unteres Gasanschlußteil oder Fußteil 23 vorgesehen, auf dem ein unterer, faßförmiger Behälter 24 abgestellt ist, sowie ein oberer faßförmiger Behälter 25, an den ein oberes Gasanschlußteil 26 angeschlossen ist.

Zwischen dem unteren Faß 24 und dem oberen Faß 25 ist ein Zwischenteil 27 angeordnet.

Das untere Gasanschlußteil 23 und das Zwischenteil 27 weisen eine Umfangswand 28, 30 mit einem Durchmesser auf, der dem Durchmesser der Fässer 24, 26 entspricht.

Am oberen Rand der Umfangswand 28 des unteren Gasanschlußteils 23 sowie an den unteren und oberen Rändern der Fässer 24, 25 und der Umfangswand 30 des Zwischenteils 27 sind jeweils Bordüren 38 vorgesehen, die einander übergreifen, so daß das untere Faß 24 auf das untere Gasanschlußteil 23, das Zwischenteil 27 auf das untere Faß 24 und das obere Faß 25 auf das Zwischenteil 27 gestellt werden können. Die Bordür-Verbindungen 38 werden jeweils durch einen nicht dargestellten Spannring gesichert.

Das untere Gasanschlußteil 23 weist ein Ventil 39 in der Umfangswand 28 auf, in das die in Figur 3 nicht dargestellte Leitung 11, 12 mit einem Kupplungsstück 40 steckbar ist.

Das Gasanschlußteil 23 ist mit einem Deckel 41 versehen, in dem mittig ein Ventil 42 angeordnet ist. Der Deckel 41 ist an der Umfangswand 28 mit einer Bordür-Verbindung 38 mit einem Spannring befestigt, wie vorstehend anhand der anderen Bordüren 38 geschildert.

Das untere Faß 24 weist einen Mantel 43 aus wärmeisolierendem Material auf. In seinem Boden 44 ist ein Ventil 45 mittig angeordnet. Ein weiteres Ventil 46 befindet sich im abnehmbaren Deckel 47. Oberhalb des Ventils 45 sowie unterhalb des Ventils 46 ist jeweils ein Lochblech oder dergleichen gasdurchlässige Wand 48, 49 vorgesehen. Dazwischen befindet sich das feste Sorbens 6.

Das obere Faß 25 ist in gleicher Weise ausgebildet. D.h. es weist einen Mantel 50 aus wärmeisolierendem Material auf. In seinem Boden 51 ist ein Ventil 52 angeordnet, und in seinem abnehmbaren Deckel 54 mit Bordüre 38' ein Ventil 53. Desgleichen sind Lochbleche 55, 56 vorgesehen, zwischen denen sich das Sorbens 7 befindet.

Das obere Gasanschlußteil 26 wird durch ein Kupplungsstück gebildet, das in das Ventil 53 im Deckel 54 des oberen Fasses 25 gesteckt ist und an das die Leitung 11 bzw. 10 (Figur 1) angeschlossen ist.

Das Zwischenteil 27 weist ein rohrförmiges Kupplungsstück 57 auf, das mit einem Ende in das Ventil 46 im Deckel 47 des unteren Fasses 24 und mit dem anderen Ende in das Ventil 52 im Boden 51 des oberen Fasses 25 steckbar ist.

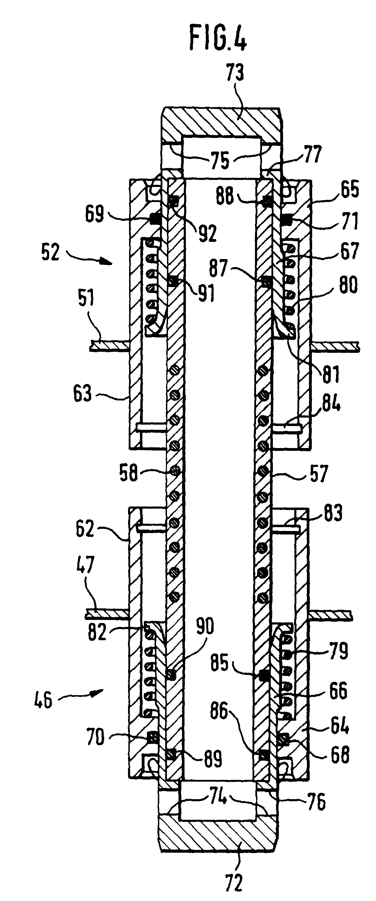

In dem Rohr 57 befindet sich eine elektrische Heizeinrichtung 58, die über elektrische Leitungen 59 versorgt wird, die durch die Umfangswand 37, die innen mit einem Mantel 30 aus wärmeisolierendem Material versehen ist, hindurchgeführt sind, ebenso wie eine Stickstoffleitung 61, deren Funktion nachstehend im Zusammenhang mit der Figur 4 näher erläutert wird.

Die Ventile 39, 42, 45, 46, 52 und 53 können beispielsweise so ausgebildet sein, wie dies in der Figur 4 anhand des Ventils 46 im Deckel 47 des unteren Fasses 24 bzw. des Ventils 52 im Boden 51 des oberen Fasses 25 dargestellt ist.

Danach weist jedes Ventil 46, 52 ein zylindrisches Ventilgehäuse 62, 63 auf, das in den Faßdeckel 47 bzw. Faßboden 51 eingeschweißt ist. Das Ventilgehäuse 62, 63 ist an seinem dem Inneren des zugehörigen Fasses 24 bzw. 25 zugewandten Ende mit einem Innenring 64, 65 versehen, an dem ein hülsenförmiger Ventilkörper 66, 67 verschieblich und gasdicht geführt ist. Dazu weist der Ring 64, 65 eine Nut 68, 69 an seiner Innenseite auf, in der ein Dichtring 70, 71 angeordnet ist. Der hülsenförmige Ventilkörper 66, 67 ist an seinem dem Inneren des zugehörigen Fasses 24, 25 zugewandten Ende durch einen Boden 72, 73 verschlossen, wobei er an seiner Umfangswand vor dem Boden 72, 73 Gasdurchtrittsbohrungen 74, 75 aufweist.

Das Rohr 57, das jeweils in das offene Ende des hülsenförmigen Ventilkörpers 66, 67 gesteckt ist, verbindet die Ventilkörper 66, 67 miteinander und stützt sich an einem Innenring 76, 77 am Ventilkörper 66, 67 ab, der auf der von dem Boden 72, 73 abgewandten Seite der Gasdurchtrittsbohrungen 74, 75 angeordnet ist.

Die Ventile 46, 52, die in Figur 4 in der geöffneten Stellung gezeigt sind, sind in Schließstellung fehlerbelastet. Dazu ist eine als Druckfeder 79, 80 ausgebildete Ventilfeder vorgesehen, die sich einerseits an dem Innenring 64, 65 am Ventilgehäuse 62, 63 und andererseits am Ventilkörper 66, 67 abstützt. Wenn sich die Ventilkörper 66, 67 in die Schließstellung bewegen, bewegt sich der Boden 72, 73 in Höhe der Ringe 64, 65 wodurch die Gasdurchtrittsbohrungen 74, 75 geschlossen werden. Damit die Ventilkörper 66, 67 in der Schließstellung der Ventile 46, 52 fixiert sind, sind ringförmige Anschläge 83, 84 an der Innenseite des Ventilgehäuses 62, 63 vorgesehen, an denen die Außenringflansche 81, 82 in Schließstellung zur Anlage gelangen. Um das rohrförmige Zwischenteil 27 gegenüber den Ventilkörpern 66, 67 abzudichten, sind an beiden Enden des Rohres 57 Nuten 85 bis 88 vorgesehen, in denen Dichtringe 89 bis 92 vorgesehen sind.

Die Dichtringe 70, 71 sowie 89 bis 92 sind den hohen Temperaturen des durch die Heizeinrichtung 58 aufgeheizten Abgases ausgesetzt. Dadurch kann ihre Dichtfunktion beeinträchtigt werden. Um einen Austritt von Abgas im Zwischenteil 27 zu vermeiden, wird in die Kammer 93 zwischen dem Rohr 57 und der Umfangswand 37 bzw. dem Mantel 60 über die Leitung 61 (Figur 3) Stickstoff mit einem Druck zugeführt, der höher ist als der Druck des Abgases in dem Rohr 57.

Zwischen dem Ventil 42 in dem unteren Gasabschlußteil 23 und dem Ventil 45 im Boden 44 des unteren Fasses 24 ist ebenfalls ein rohrförmiges Kupplungsstück 94 vorgesehen. Desgleichen weisen die Kupplungsstücke 26, 40 rohrförmige Abschnitte auf, die in die offenen Enden der nicht dargestellten hülsenförmigen Ventilkörper der Ventile 53 und 39 gesteckt sind.

Je ein Thermoelement oder dergleichen Temperaturmeßeinrichtung 95 bzw. 96 ist im Sorbens 6 bzw. 7 benachbart zum Zwischenteil 27 vorgesehen. Ferner ist je ein Thermoelement oder dergleichen Temperaturmeßeinrichtung 97 bzw. 98 im unteren bzw. oberen Gasanschlußteil 23 bzw. 26 vorgesehen (Figur 3).

Damit kann auf die Dichtungen 70, 71 sowie 89 bis 92 ganz verzichtet werden. Der N₂-Überdruck in der Kammer 92 bildet nämlich eine Gasdichtung, die einen Abgas-Austritt aus dem Rohr 57 bzw. der Ventilen 46, 51 verhindert.

## Patentansprüche

1. Verfahren zur Reinigung von Abgasen, die Ozon abbauende und/oder klimawirksame halogenierte Verbindungen enthalten, mit einer Sorptionseinrichtung, die wenigstens ein festes stationäres Bett zur Sorption der ozonabbauenden und/oder klimawirksamen halogenierten Verbindungen und eine Heizeinrichtung aufweist, dadurch gekennzeichnet, daß die Sorptionseinrichtung (S1, S2) zwei Kammern (1, 2) aufweist, die jeweils ein festes stationäres Sorbens (6, 7) für die ozonabbauenden und/oder klimawirksamen halogenierten Verbindungen enthalten und über die Heizeinrichtung (4, 58) miteinander kommunizieren, wobei folgende Schritte durchgeführt werden:
a) das Sorbens (6, 7) in einer der beiden Kammern (1, 2) wird zumindest teilweise auf eine zur Zersetzung der ozonabbauenden und/oder klimawirksamen halogenierten Verbindungen erforderliche Temperatur erwärmt,
b) das zu reinigende Abgas wird bei eingeschalteter Heizeinrichtung der auf diese Temperatur erwärmten einen, ersten Kammer (1, 2) zugeführt, und darin gereinigt,
c) das aus der ersten Kammer (1, 2) austretende gereinigte Abgas strömt nach Erwärmung in der Heizeinrichtung (4, 58) in die zweite Kammer (2, 1), bis dessen Sorbens (7, 6) zumindest teilweise die für die Zersetzung der ozonabbauenden und/oder klimawirksamen halogenierten Verbindungen erforderliche Temperatur erreicht hat,
d) das zu reinigende Abgas wird der zweiten Kammer (2, 1) zugeführt und dann gereinigt,
e) das aus der zweiten Kammer (2, 1) austretende gereinigte Abgas strömt nach Erwärmung in der Heizeinrichtung in die erste Kammer (1, 2), bis dessen Sorbens (6, 7) zumindest teilweise die für die Zersetzung der ozonabbauenden und/oder klimawirksamen halogenierten Verbindungen erforderliche Temperatur erreicht hat,
f) die Schritte (b) bis (e) werden wiederholt.

2. Verfahren nach Anspruch 1, dadurch gekennzeichnet, daß der Schritt (a) durchgeführt wird, indem bei eingeschalteter Heizeinrichtung (4, 58) der zweiten Kammer (2, 1) ein inertes Trägergas zugeführt wird.

3. Verfahren nach Anspruch 1, dadurch gekennzeichnet, daß das zu reinigende Abgas die ozonabbauenden und/oder klimawirksamen halogenierten Verbindungen in einem inerten Trägergas enthält.

4. Verfahren nach Anspruch 2 oder 3, dadurch gekennzeichnet, daß das inerte Trägergas Stickstoff ist.

5. Verfahren nach Anspruch 1, dadurch gekennzeichnet, daß die für die Zersetzung der ozonabbauenden und/oder klimawirksamen halogenierten Verbindungen erforderliche Temperatur mindestens 150° C beträgt.

6. Verfahren nach Anspruch 1, dadurch gekennzeichnet, daß die für die Zersetzung der ozonabbauenden und/oder klimawirksamen halogenierten Verbindungen erforderliche Temperatur 150° C bis 500° C beträgt.

7. Vorrichtung zur Durchführung des Verfahrens nach einem der Ansprüche 1 bis 6, gekennzeichnet durch eine Sorptionseinrichtung mit zwei übereinander angeordneten Behältern (24, 25) mit einem festen stationären Bett (6, 7) zur Sorption der ozonabbauenden und/oder klimawirksamen halogenierten Verbindungen, wobei jeder Behälter (24, 25) ein Ventil (45, 57) im Boden (44, 51) und ein Ventil (46, 53) an der oberen Seite aufweist, wobei ein unteres Gasanschlußteil (23), an das der untere Behälter (24) anschließbar ist, ein Zwischenteil (27) mit einer Heizeinrichtung (58) und ein oberes Gasanschlußteil (26), das an den oberen Behälter (25) anschließbar ist, vorgesehen sind, wobei das Zwischenteil (27) und die beiden Gasanschlußteile (23, 26) Kupplungsstücke (57, 94) aufweisen, das Kupplungsstück (57) des Zwischenteils (27) mit dem Ventil (46) in der oberen Seite des unteren Behälters (24) und mit dem Ventil (52) im Boden (51) des oberen Behälters (25), das Kupplungsstück (94) des unteren Gasanschlußteils (23) mit dem Ventil (45) im Boden (44) des unteren Behälters (24) und das Ventil (53) in der oberen Seite des oberen Behälters (25) mit dem Kupplungsstück des oberen Gasanschlußteils (26) zusammensteckbar ausgebildet sind, und sich alle Ventile (45, 46, 52, 53) der Behälter (24, 25) beim Zusammenstecken mit den Kupplungsstücken (57, 94) unter Bildung eines vom unteren Gasanschlußteil (23) zum oberen Gasanschlußteil (26) kommunizierenden Gasraums öffnen.

8. Vorrichtung nach Anspruch 7, dadurch gekennzeichnet, daß das Zwischenteil (27) zumindest in dem Bereich, in dem das Kupplungsstück (57) in das Ventil (46) in der Oberseite (47) des unteren Behälters (24) und in das Ventil (52) im Boden (54) des oberen Behälters (25) steckbar ist, eine Kammer (93) aufweist, an die eine Inertgasleitung (61) anschließbar ist.

## Claims

1. A method for cleaning waste gases containing ozone-degrading and/or climate-active halogenated compounds having a sorption device which has at least one fixed stationary bed for sorption of the ozone-depleting and/or climate-active halogenated compounds and a heating device, chracterized in that the sorption device (S1, S2) has two chambers (1, 2) each containing a solid stationary sorbent (6, 7) for the ozone-depleting and/or climate-active halogenated compounds and communicating with the other via the heating device (4, 58), comprising the followings steps:
a) heating the sorbent (6, 7) in one of the two chambers (1, 2) at least partly to a temperature necessary for decomposing the ozone-depleting and/or climate-active halogenated compounds,
b) feeding the waste gas to be cleaned, with the heating device switched on, to the first chamber (1, 2) heated to this temperature and cleaning it therein,
c) having the cleaned waste gas emerging from the first chamber (1, 2), after being heated in the heating device (4, 58), flow into the second chamber (2, 1) until its sorbent (7, 6) has reached at least partly the temperature necessary for decomposing the ozone-depleting and/or climate-active halogenated compounds,
d) feeding the waste gas to be cleaned to the second chamber (2, 1) and then cleaning it,
e) having the cleaned waste gas emerging from the second chamber (2, 1), after being heated in the heating device, flow into the first chamber (1, 2) until its sorbent (6, 7) has reached at least partly the temperature necessary for decomposing the ozone-depleting and/or climate-active halogenated compounds,
f) repeating steps (b) to (e).

2. The method of claim 1, characterized in that step (a) is performed by feeding an inert carrier gas to the second chamber (2, 1) with the heating device (4, 58) switched on.

3. The method of claim 1, characterized in that the waste gas to be cleaned contains the ozone-depleting and/or climate-active halogenated compounds in an inert carrier gas.

4. The method of claim 2 or 3, characterized in that the temperature necessary for decomposing the ozone-depleting and/or climate-active halogenated compounds is at least 150°C.

5. The method of claim 1, characterized in that the temperature necessary for decomposing the ozone-depleting and/or climate-active halogenated compounds is at least 150°C.

6. The method of claim 1, characterized in that the temperature necessary for decomposing the ozone-depleting and/or climate-active halogenated compounds is 150°C to 500°C.

7. An apparatus for carrying out the method according to anyone of claims 1 to 6, characterized by a sorption device with two stacked vessels (24, 25) having a solid stationary sorbent (6, 7) for sorption of the ozone-depleting and/or climate-active halogenated compounds, each vessel (24, 25) having a valve (45,57) in the bottom (44, 51) and a valve (46, 53) on the upper side (47, 54), whereby a lower gas connecting piece (23) to which the lower vessel (24) is connectable, an intermediate piece (27) with a heating device (58) and an upper gas connecting piece (26) connectable to the upper vessel (25) are provided, the intermediate piece (27) and the two gas connecting pieces (23, 26) having coupling pieces (57, 94), the coupling piece (57) of the intermediate piece (27) being adapted to be assembled with the valve (46) in the upper side (47) of the lower vessel (24) and with the valve (52) in the bottom (51) of the upper vessel (25), the coupling device (94) of the lower gas connecting piece (23) with the valve (45) in the bottom (44) of the lower vessel (24), and the valve (53) in the upper side (54) of the upper vessel (25) with the coupling piece of the upper gas connecting piece (26), and all valves (45, 46, 52, 53) of the vessels (24, 25) opening upon assembly with the coupling pieces (57, 94) so as to form a gas space communicating from the lower gas connecting piece (23) to the upper gas connecting piece (26).

8. The apparatus of claim 7, characterized in that the intermediate piece (27) has, at least in the area where the coupling piece (57) is inserted in the valve (46) in the upper side (47) of the lower vessel (24) and in the valve (52) in the bottom (54) of the upper vessel (25), a chamber (93) to which an inert gas is fed.

## Revendications

1. Procédé de purification de gaz résiduaires qui contiennent des composés halogénés dégradant l'ozone et/ou qui ont une influence sur le climat, comportant un dispositif de sorption qui présente au moins un lit stationnaire pour la sorption des composés halogénés dégradant l'ozone et/ou qui ont une influence sur le climat, et un dispositif de chauffage, caractérisé en ce que le dispositif de sorption (S1, S2) présente deux chambres (1, 2) qui contiennent chacune un sorbant (6, 7) solide stationnaire pour les composés halogénés dégradant l'ozone et/ou qui ont une influence sur le climat et qui communiquent l'une avec l'autre par l'intermédiaire du dispositif de chauffage (4, 58), les étapes suivantes étant exécutées :
a) Le sorbant (6, 7) dans l'une des deux chambres (1, 2) est chauffé au moins partiellement à une température nécessaire à la décomposition des composés halogénés dégradant l'ozone et/ou qui ont une influence sur le climat,
b) lorsque le dispositif de chauffage est mis en marche, le gaz résiduaire à purifier est amené à ladite première chambre (1, 2) chauffée à cette température et il est purifié dans ladite chambre,
c) le gaz résiduaire purifié sortant de la première chambre (1, 2) s'écoule, après réchauffement dans le dispositif de chauffage (4, 58), dans la seconde chambre (2, 1) jusqu'à ce que son sorbant (7, 6) ait atteint au moins partiellement la température nécessaire à la décomposition des composés halogénés dégradant l'ozone et/ou qui ont une influence sur le climat,
d) le gaz résiduaire à purifier est amené à la seconde chambre (2, 1) et il est alors purifié,
e) le gaz résiduaire purifié sortant de la seconde chambre (2, 1) s'écoule, après réchauffement dans le dispositif de chauffage, dans la première chambre (1, 2) jusqu'à ce que son sorbant (6, 7) ait atteint au moins partiellement la température nécessaire à la décomposition des composés halogénés dégradant l'ozone et/ou qui ont une influence sur le climat,
f) les étapes (b) à (e) sont répétées.

2. Procédé selon la revendication 1, caractérisé en ce que l'étape (a) est exécutée en amenant un gaz porteur inerte à la seconde chambre (2, 1), lorsque le dispositif de chauffage (4, 58) est mis en marche.

3. Procédé selon la revendication 1, caractérisé en ce que le gaz résiduaire à purifier contient dans un gaz porteur inerte les composés halogénés dégradant l'ozone et/ou qui ont une influence sur le climat.

4. Procédé selon l'une ou l'autre des revendications 2 et 3, caractérisé en ce que le gaz porteur inerte est de l'azote.

5. Procédé selon la revendication 1, caractérisé en ce que la température nécessaire à la décomposition des composés halogénés dégradant l'ozone et/ou qui ont une influence sur le climat est au moins 150°C.

6. Procédé selon la revendication 1, caractérisé en ce que la température nécessaire à la décomposition des composés halogénés dégradant l'ozone et/ou qui ont une influence sur le climat est de 150° C à 500°C.

7. Dispositif permettant l'exécution du procédé selon l'une quelconque des revendications 1 à 6, caractérisé par un dispositif de sorption comportant deux réservoirs (24, 25) agencés l'un au-dessus de l'autre, avec un lit stationnaire (6, 7) pour la sorption des composés halogénés dégradant l'ozone et/ou qui ont une influence sur le climat, chaque réservoir (24, 25) présentant une soupape (45, 57) dans le fond (44, 51) et une soupape (46, 53) sur la face supérieure, et il est prévu une pièce de raccordement de gaz inférieure (23), à laquelle le réservoir (24) inférieur est susceptible d'être raccordé, une pièce intermédiaire (27) comportant un dispositif de chauffage (58) et une pièce de raccordement de gaz supérieure (26), qui peut être raccordée au réservoir supérieur (25), la partie intermédiaire (27) et les deux pièces de raccordement de gaz (23, 26) présentant des pièces de couplage (57, 94), la pièce de couplage (57) de la pièce intermédiaire (27) étant réalisée enfichable avec la soupape (46) dans la face supérieure du réservoir inférieur (24) et avec la soupape (52) dans le fond (51) du réservoir supérieur (25), la pièce de couplage (94) de la partie de raccordement de gaz inférieure (23) étant réalisée enfichable avec la soupape (45) dans le fond (44) du réservoir inférieur (24), et la soupape (53) dans la face supérieure du réservoir supérieur (25) étant réalisée enfichable avec la pièce de couplage de la pièce de raccordement de gaz supérieur (26), toutes les soupapes (45, 46, 52, 54) des réservoirs (24, 25) s'ouvrant lors de l'enfichage avec les pièces de couplage (57, 94) en formant un espace de gaz communiquant depuis la pièce de raccordement inférieure (23) jusqu'à la pièce de raccordement supérieure (26).

8. Dispositif selon la revendication 7, caractérisé en ce qu'au moins dans la région dans laquelle la pièce de couplage (57) est susceptible d'être enfichée dans la soupape (46), dans la face supérieure (47) du réservoir inférieur (24), et dans la soupape (52), dans le fond (54) du réservoir supérieur (25), la partie intermédiaire (27) présente une chambre (93) à laquelle une conduite de gaz inerte (61) est susceptible d'être raccordée.
